(19) Europäisches Patentamt
European Patent Office
Office européen des brevets

(11) Veröffentlichungsnummer: **0 088 205**
**B1**

# (12) EUROPÄISCHE PATENTSCHRIFT

(45) Veröffentlichungstag der Patentschrift: **23.10.85**

(51) Int. Cl.[4]: **E 21 B 43/22**

(21) Anmeldenummer: **83100088.0**

(22) Anmeldetag: **07.01.83**

(54) **Verfahren zur Gewinnung von weitgehend emulsionsfreiem Öl aus einer unterirdischen Lagerstätte.**

(30) Priorität: **06.03.82 DE 3208208**

(43) Veröffentlichungstag der Anmeldung: **14.09.83 Patentblatt 83/37**

(45) Bekanntmachung des Hinweises auf die Patenterteilung: **23.10.85 Patentblatt 85/43**

(84) Benannte Vertragsstaaten: **DE**

(56) Entgegenhaltungen:
**EP - A - 0 047 369**
**EP - A - 0 047 370**
**EP - A - 0 058 371**
**EP - A - 0 058 871**
**US - A - 4 110 228**

**TENSIDE DETERGENTS, Band 16, Nr. 5, 1979, Seiten 256-261, Carl Hansen Verlag, München, DE. D. BALZER et al.: "Die Phasen-Inversions-Temperatur als Auswahlkriterium für Tenside bei der tertiären Erdölgewinnung"**
**TENSIDE DETERGENTS, Band 14, Nr. 5, September/Oktober 1977, Seiten 237-239, Carl Hansen Verlag, München, DE. H. STACHE et al.: "Carboxymethylierte Oxäthylate als Tenside für die tertiäre Erdölgewinnung"**

(73) Patentinhaber: **CHEMISCHE WERKE HÜLS AG, - RSP Patente / PB 15 - Postfach 13 20, D-4370 Marl 1 (DE)**

(72) Erfinder: **Balzer, Dieter, Dr., Griesheimer Strasse 18, D-4370 Marl (DE)**

(56) Entgegenhaltungen: (Fortsetzung)
**TENSIDE DETERGENTS, Band 17, Nr. 1, 1980, Seiten 10-12, Carl Hansen Verlag, München, DE. E. KUNKEL: "Beitrag zur Analytik carboxymethylierter Oxethylate"**

**EP 0 088 205 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

BUNDESDRUCKEREI BERLIN

**Beschreibung**

Bei der Gewinnung von Öl aus ölführenden Lagerstätten gelingt es im allgemeinen nur, einen Bruchteil des ursprünglich vorhandenen Öls durch primäre Gewinnungsverfahren zu fördern. Hierbei gelangt das Öl infolge des natürlichen Lagerstättendrucks an die Erdoberfläche. Bei der sekundären Ölgewinnung wird Wasser in eine oder mehrere Injektionsbohrungen der Formation eingepreßt und das Öl zu einer oder mehreren Produktionsbohrungen getrieben und sodann an die Erdoberfläche gebracht. Dieses sogenannte Wasserfluten als Sekundärmaßnahme ist relativ billig und wird entsprechend häufig eingesetzt, führt jedoch in vielen Fällen nur zu einer geringen Mehrentölung der Lagerstätte.

Eine wirksame Verdrängung des Öls, die teurer, jedoch im Hinblick auf die gegenwärtige Ölverknappung volkswirtschaftlich dringend erforderlich ist, gelingt durch tertiäre Maßnahmen. Darunter sind Verfahren zu verstehen, bei denen entweder die Viskosität des Öls erniedrigt und/oder die Viskosität des nachflutenden Wassers erhöht und/oder die Grenzflächenspannung zwischen Wasser und Öl erniedrigt werden.

Die meisten dieser Prozesse lassen sich entweder als Lösungs- oder Mischungsfluten, thermische Ölgewinnungsverfahren, Tensid- oder Polymerfluten bzw. als Kombination von mehreren der genannten Verfahren einordnen.

Thermische Gewinnungsverfahren beinhalten die Injizierung von Dampf oder heißem Wasser bzw. sie erfolgen als Untertage-Verbrennung. Lösungs- oder Mischungsverfahren bestehen im Injizieren eines Lösungsmittels für das Erdöl in die Lagerstätte, wobei dies ein Glas und/oder eine Flüssigkeit sein kann. Tensidflutprozesse — je nach Tensidkonzentration, gegebenenfalls Tensidtyp und Zusätzen unterscheidet man tensidgestütztes Wasserfluten, übliches Tensidfluten (Lowtension flooding), micellares Fluten und Emulsionsfluten — beruhen in erster Linie auf einer starken Erniedrigung der Grenzflächenspannung zwischen Öl und Lagerstättenwasser. In einigen Fällen jedoch, insbesondere in Gegenwart höherer Tensidkonzentrationen, entstehen Wasser-in-Öl-Dispersionen mit, verglichen zum Öl, deutlich erhöhter Viskosität, so daß hier das Tensidfluten auch auf eine Verkleinerung des Mobilitätsverhältnisses zielt, wodurch bekanntlich der Wirkungsgrad der Ölverdrängung erhöht wird. Reines Polymerfluten beruht überwiegend auf dem zuletzt beschriebenen Effekt des günstigeren Mobilitätsverhältnisses zwischen Öl und nachflutendem Wasser.

Die vorliegende Erfindung bezieht sich auf ein Verfahren zur Gewinnung von Öl durch Tensidfluten. Als ölmobilisierende Tenside wurden bislang vor allem organische Sulfonate, wie Alkyl-, Alkylaryl- oder Petroleumsulfonate, beschrieben. Diese besitzen jedoch eine sehr niedrige Toleranzgrenze gegenüber der Salinität der Lagerstättenwässer. Bereits Salzkonzentrationen von 1000 ppm gelten als problematisch, wobei die Empfindlichkeit dieser Tenside gegenüber Erdalkaliionen besonders ausgeprägt ist. Hier wird als obere kritische Grenzkonzentration ca. 500 ppm angenommen (US-PS 4 110 228). Bei höheren Salzkonzentrationen bilden sich hier Fällungsprodukte, die zu Verstopfungen der Formation führen können. Da jedoch viele Lagerstättenwässer wesentlich höhere Salinitäten besitzen, in Norddeutschland bis zu 250 000 ppm, hat man nach Wegen gesucht, die sonst gut ölmobilisierenden Eigenschaften der organischen Sulfonate auch für höher salinare Lagerstättensysteme nutzbar zu machen. Im Gemisch mit Cosurfactants, wie Alkoholen oder nichtionischen Tensiden, zeigten sich organische Sulfonate auch weniger elektrolytempfindlich, allerdings war dann meist auch die ölmobilisierende Wirkung verschlechtert.

Im Gegensatz zu dieser Substanzgruppe zeigen Alkyl- bzw. Alkylarylpolyglykolethersulfate oder carboxymethylierte Alkyl- bzw. Alkylaryloxyethylate eine gute Verträglichkeit selbst mit extrem hohen Salinitäten (z. B. 250 000 ppm) der Lagerstättenwässer. Da die ölmobilisierende Wirkung dieser Tenside gut ist (D. Balzer und K. Kosswig, Tenside Detergents 16, 256 (1979)) sowie ihre Herstellung einfach und wirtschaftlich ist, sind diese Substanzklassen geradezu prädestiniert für den Einsatz bei der Ölverdrängung in mittel- und hochsalinaren (10 000 bis 250 000 ppm Gesamtsalzgehalt) Lagerstättensystemen.

Bei zahlreichen Untersuchungen an Modellformationen mit carboxymethylierten Oxethylaten als Tensiden war jedoch zu beobachten, daß das Tertiäröl überwiegend als Emulsion gefördert wurde. Da es sich hierbei um o/w-Emulsion handelt, deren Spaltung in eine Öl- und eine Wasserphase in der Erdöltechnologie teilweise sehr aufwendig ist, bedeutet dies einen erheblichen Nachteil des Verfahrens. Es war daher Aufgabe der vorliegenden Erfindung, ein Verfahren zu entwickeln, das es gestattet, durch carboxymethylierte Oxethylate mobilisiertes Tertiäröl weitgehend emulsionsfrei zu fördern. Diese Aufgabe wurde durch das in den Ansprüchen 1 bis 5 beschriebene Verfahren gelöst. Basis des Verfahrens ist die überraschende Feststellung, derzufolge es gelingt, das Öl dann überwiegend emulsionsfrei auszufluten, wenn der Lösung bzw. Dispersion des Tensids in Lagerstättenwasser oder Flutwasser, sofern nicht mit Formationswasser geflutet wird, zusätzlich lösliche Erdalkalisalze zugefügt werden. Es handelt sich dabei im allgemeinen um Formationswässer oder Flutwässer mit einem Erdalkaliionengehalt von weniger als etwa 3%. Offenbar ist diese Eigenschaft substanzspezifisch für carboxymethylierte Oxethylate, denn sie wurde bei Polyglykolethersulfaten auch im Gemisch mit Oxethylaten nicht beobachtet.

Die vorliegende Erfindung bezieht sich auf den Einsatz von carboxymethylierten Oxethylaten als

ölmobilisierende Tenside. Zweckmäßigerweise stellt man diese Verbindungen nach DE-PS 2 418 444 durch Umsetzung von Oxethylaten der Formel

$$R-(O-CH_2-CH_2)_n-OH$$

mit einem Salz der Chloressigsäure in Gegenwart von Alkalihydroxid oder Erdalkalihydroxid her. Aber auch andere Herstellungsverfahren sind geeignet. R bedeutet hierbei einen gesättigten oder ungesättigten, geradkettigen oder verzweigten Alkylrest mit 6 bis 20, vorzugsweise 8 bis 16 C-Atomen oder einen Alkylarylrest mit 3 bis 16 C-Atomen im Alkylrest. Der Oxethylierungsgrad n kann nun nicht nur Werte von 3 bis 15 annehmen, wie in der Patentanmeldung P 3 033 927.6-24 dargelegt, sondern ebenfalls Werte zwischen 1 und 3. Das Kation kann Natrium, Kalium, Lithium, Ammonium, Calcium oder Magnesium sein. Entsprechend ihrer Herstellung enthalten die carboxymethylierten Oxethylate stets noch ansehnliche Mengen nicht umgesetztes Oxethylat. Die Formel

$$R-(O-CH_2-CH_2)_n-OCH_2-COOM$$

bezeichnet daher stets ein Gemisch mit unterschiedlichen Mengen an nicht umgesetztem Oxethylat. Demgemäß läßt sich ein Carboxymethylierungsgrad definieren. Es hat sich gezeigt, daß Mischungen mit einem Carboxymethylierungsgrad zwischen 10 und 90%, vorzugsweise zwischen 30 und 90%, das Öl wirksam zu verdrängen vermögen. Besonders wirksam sind Mischungen mit Carboxymethylierungsgraden von 50 bis 90%.

Die beschriebenen Mischungen aus anionischem und nichtionischem Tensid, carboxymethylierte Oxethylate genannt, sind in üblichen Lagerstättenwässern löslich oder zumindest gut dispergierbar, wobei keinerlei Ausfällungen beobachtet werden.

Erfindungsgemäß geht man nun folgendermaßen vor:

Nach Feststellung der ölmobilisierenden Eigenschaften eines carboxymethylierten Oxethylates für das betreffende Lagerstättensystem durch einen Vorversuch in einer Sandschüttung als Modellformation wird das Tensid in Formationswasser bzw. Flutwasser gelöst oder dispergiert. Letzterem wird zuvor oder nachträglich wasserlösliches Erdalkalisalz in geeigneter Konzentration zugesetzt. Hierbei kann die Tensidkonzentration Werte zwischen 0,1 und 30%, vorzugsweise zwischen 0,1 bis 20%, betragen. Die Konzentration der Erdalkalisalze in dem als Lösemittel für das Tensid dienenden Formationswasser oder Flutwasser wird zweckmäßigerweise mit Hilfe der Phasen-Inversions-Temperatur (PIT) der Rohölemulsion bestimmt. Letztere wird hergestellt aus dem Öl und dem mit Erdalkalisalzen angereicherten Formationswasser der betreffenden Lagerstätte bzw. Flutwasser sowie dem ausgewählten Tensid. Das Phasenverhältnis der Emulsion Öl zu Wasser kann bei der Bestimmung der PIT 2 : 1 bis 1 : 9 betragen, zweckmäßigerweise wählt man 1 : 1. Als Tensidmenge kommen hier Konzentrationen zwischen 0,5 und 10% in Frage, zweckmäßig ist eine 1- bis 2%ige Tensidkonzentration. Die PIT, bei der eine o/w-Emulsion in eine w/o-Emulsion umschlägt, läßt sich durch Messung der elektrischen Leitfähigkeit sehr leicht indizieren, wie an anderer Stelle bereits ausführlich dargestellt (D. Balzer und K. Kosswig, Tenside Detergents 16, 256 (1979)). Da bei der PIT oder zumindest in ihrer Nähe ein Minimum der Grenzflächenspannung zwischen der Öl- und der Wasserphase durchlaufen wird, zeigt diese Temperatur den Bereich günstiger Ölmobilisierung durch das Tensid an. Außerdem ist bekannt, daß dann das Öl überwiegend emulsionsfrei aus Modellformationen geflutet werden kann, wenn die PIT entweder unterhalb der Lagerstättentemperatur liegt oder mit ihr übereinstimmt (D. Balzer und K. Kosswig, s. o.). Nach neueren Befunden ist dies auch dann der Fall, wenn die PIT bis zu 10°C über der Lagerstättentemperatur liegt.

Bei erdalkaliarmen Lagerstättenwässern (weniger als 3% Erdalkaliionen im Formationswasser bzw. Flutwasser) in Gegenwart von carboxymethylierten Oxethylaten nimmt nun — wie überraschenderweise gefunden wurde — die PIT durch zugesetzte Erdalkalisalze stark ab. Aufgrund dieser Beobachtung läßt sich für ein bestimtes carboxymethyliertes Oxethylat, für das die PIT der Mischung Öl/Formationswasser bzw. Flutwasser/Tensid etwas höher liegt als die Lagerstättentemperatur, durch Zugabe von Erdalkaliionen Öl optimal mobilisieren und emulsionsfrei fördern. Die nach der geschilderten Methode als zweckmäßig festgestellte Konzentration an Erdalkaliionen wird daher der Tensidlösung zugefügt und diese mit Hilfe von Injektionspumpen durch eine oder mehrere Injektionsbohrungen in die Lagerstätte eingebracht. Hierbei kann die mit Erdalkaliionen versetzte Tensidlösung entweder kontinuierlich oder in Form eines Slugs, d. h. eines eng begrenzten Volumens von 0,05 bis 4,0 PV (= Vielfaches des Porenvolumens der Lagerstätte) eingesetzt werden. Die Größe des Slugs richtet sich vor allem nach der Konzentration der Tensidlösung und nach der Wirtschaftlichkeit.

Zweckmäßigerweise geht dem Tensidfluten ein Wasserfluten voraus, wobei als Flutflüssigkeit das produzierte Formationswasser oder Flutwasser eingesetzt wird, dem in gleich hoher Konzentration wie bei der Tensidlösung Erdalkaliionen zugefügt werden. Die Erdalkalikonzentration kann hier, verglichen zu der des Tensidslugs, auch etwas (um 5 bis 10%) erhöht sein. Die Größe dieses Wasserslugs beträgt 0,01 bis 4 PV, vorzugsweise 0,05 bis 1 PV. Dem Tensidslug nachgeschaltet injiziert man zweckmäßigerweise sowohl aus Gründen der Mobilitätskontrolle als auch zum Schutz der Tensidlösung vor eindringendem Formationswasser oder Flutwasser einen Polymer-Slug in die Lagerstätte. Hierzu wird ein

Polymer oder Polymergemisch in einer solchen Konzentration in dem Formationswasser bzw. Flutwasser gelöst, daß die Viskosität 4- bis 6mal so hoch ist wie die des Öls. Bei Lagerstätten mittlerer und höherer Salinität (1 bis 28%) kommen hier insbesondere Cellulosederivate oder Bipolymere, wie Polysaccharide, die in Gegenwart der erhöhten Salzkonzentrationen noch eine ausreichende Viskosität besitzen und keine Fällungen zeigen, in Frage. Der Polymerlösung oder gegebenenfalls zuvor dem hier als Lösemittel dienenden Formationswasser oder Flutwasser wird die gleiche oder eine ähnlich hohe Erdalkaliionenkonzentration zugegeben wie der Tensidlösung.

Als Erdalkalisalze, welche erfindungsgemäß einzusetzen sind, kommen alle Erdalkaliverbindungen in Frage, die allein oder in Wechselwirkung mit den anderen Substanzen des Verfahrens keine Fällungen oder andere Unverträglichkeiten, wie z. B. extreme Viskositätsveränderungen, verursachen. Beispiele sind: Ca-Chlorid, Mg-Chlorid, Ca-Bromid, Mg-Bromid, Ca-Nitrat, Mg-Nitrat oder auch Sr-Chlorid. Aus Gründen der Kosten und der Umweltbelastung werden Ca- und Mg-Chlorid besonders bevorzugt. Geeignet als Zusätze bei der Tensidlösung sind auch die Erdalkalisalze der carboxymethylierten Oxethylate.

Zweckmäßigerweise schließt sich an das Injizieren der Polymerlösung normales Wasserfluten an. Dieses wird so lange fortgesetzt, wie sich wirtschaftlich Öl fördern läßt.

Die nachfolgenden Beispiele sollen das erfindungsgemäße Verfahren erläutern:

## Beispiel 1 (Messung der PIT)

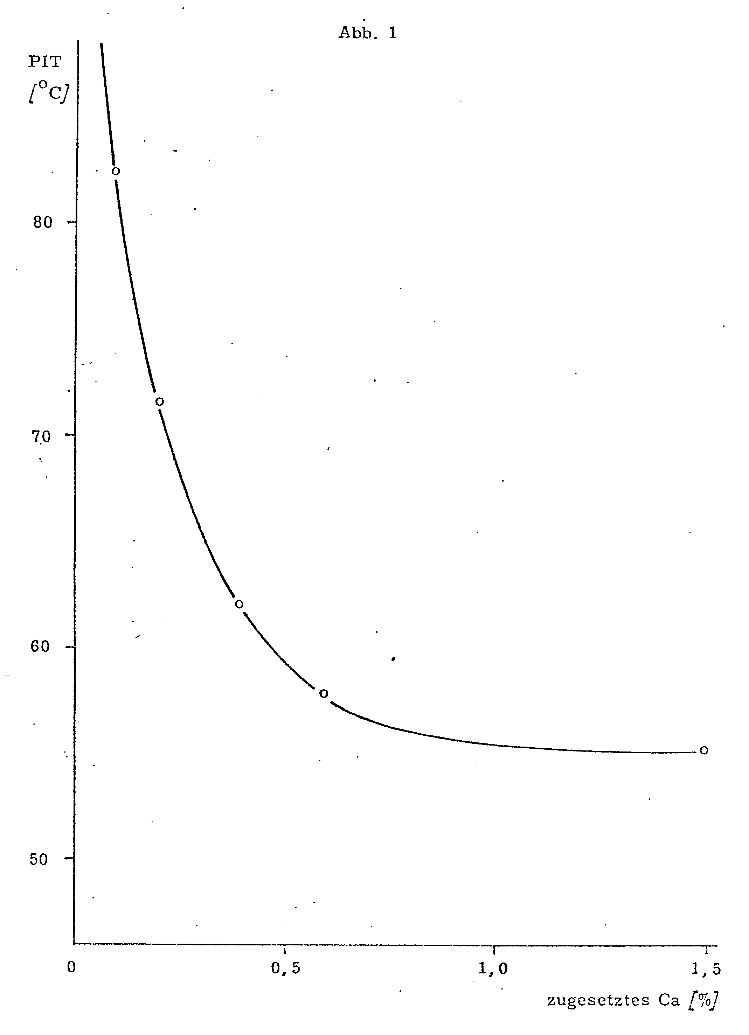

In ein 150-ml-Doppelwandgefäß aus Glas zur Messung der elektrischen Leitfähigkeit von Flüssigkeiten wurden 50 ml eines paraffinbasischen Rohöls von 40° C API (Rohöl B) sowie 100 ml 10%ige Kochsalzlösung, in der 1 g carboxymethyliertes Oxethylat eines Fettalkoholgemisches mit 12 bis 18 Kohlenstoffatomen und 2,9 Mol EO/Mol dispergiert waren, eingefüllt. Sodann wurde die Mischung kurzzeitig einem hochtourigen Rührwerk ausgesetzt und die gebildete Rohölemulsion durch weiteres Rühren mit einem üblichen Magnetrührer vor dem Brechen bewahrt. Zur Messung der elektrischen Leitfähigkeit wurde das Leitfähigkeitsmeßgerät LF 42 WTW mit Temperaturkompensation verwendet. Die Leitfähigkeit wurde in Abhängigkeit der Temperatur gemessen. Bei 20° C betrug sie für die Emulsion ca. $4{,}5 \cdot 10^4$ µS. Fügt man hingegen der wäßrigen NaCl-Lösung 0,28% $CaCl_2$ hinzu, so wird bei 82° C eine Phaseninversion beobachtet, wobei sich die elektrische Leitfähigkeit sprunghaft von ca. $5 \cdot 10^4$ µS auf Werte $<1$ µS ändert. Wird die Emulsion wieder abgekühlt, so nimmt die Leitfähigkeit bei 82° C sprunghaft den umgekehrten Verlauf. Man nennt diese Temperatur die Phasen-Inversions-Temperatur. Erhöht man die Calciumionenkonzentration, so wird die PIT erniedrigt (Abbildung 1). Sehr ähnliche Effekte werden auch durch die Zugabe von Magnesiumsalzen und Strontiumsalzen beobachtet.

## Beispiel 2

Als Modellformation für diesen Flutversuch wurde ein waagerecht gelagerter zylindrischer Kern aus Bentheimer Sandstein mit einem Durchmesser von ca. 8 cm und einer Länge von ca. 50 cm verwendet. Er wurde mit Epoxidharz ummantelt, seine Endseiten geschliffen und mit mittels O-Ringen gedichteter Metallflansche verschlossen. Zur Temperierung diente ein Wasserbad, das von einem Thermostaten versorgt wurde. Die Versuchstemperatur lag bei 43° C. Der Sandstein wurde mittels einer Membranpumpe mit Formationswasser benetzt, wobei das Porenvolumen (PV ca. 600 ml) und die Permeabilität (ca. 1500 mD) des Sandsteins gemessen wurden. Anschließend wurde mit Rohöl gesättigt, wobei auch der Haftwassergehalt (ca. 25%) bestimmt wurde.

Nunmehr setzte das Wasserfluten mit einer Flutgeschwindigkeit von ca. 2 m/d ein. Nach Einfluten von ca. 1,5 PV Formationswasser, wobei ein Verwässerungsgrad von 98 bis 100% erzielt wurde, wurde Tensid (Oxethylat eines Fettalkoholgemisches mit 12 bis 18 Kohlenstoffatomen und 2,9 Mol EO/Mol) dispergiert in Formationswasser injiziert. Die Flutgeschwindigkeit hierbei betrug ca. 0,6 m/d.

Rohöl B wurde verwendet, das entsprechende Formationswasser (B) enthielt pro l ca 63,6 g NaCl, 0,4 g KCl, 15,1 g $CaCl_2$, 3,1 g $MgCl_2$, 0,4 g $SrCl_2$ und 0,4 g $BaCl_2$.

Durch Wasserfluten wurde eine Entölung von 40% erzielt. Sie ließ sich erheblich — um weitere 28% — steigern durch die Injektion von 0,4 PV einer 5%igen Lösung eines carboxymethylierten Oxethylats eines Alkoholgemisches mit 12 bis 18 Kohlenstoffatomen und 2,7 Mol Ethylenoxid pro Mol. Die Phasen-Inversions-Temperatur der betreffenden Rohölemulsion lag bei 47° C. Während des Transportes der durch das Tensid erzeugten Ölbank wurde ein mittlerer Druckgradient von 0,7 bar/m gemessen. Das Tensid brach erst nach dem Ausfluten der Ölbank durch, so daß das Öl emulsionsfrei gewonnen wurde.

Beispiel 3 (Vergleichsbeispiel)

Bei praktisch identischen Bedingungen, Substanzen, Mengen und Verfahrensschritten wie in Beispiel 2, jedoch unter Verwendung eines synthetischen Formationswassers, das sich von Formationswasser B nur darin unterscheidet, daß es kein $CaCl_2$ enthält, wurde dieser Versuch durchgeführt. Durch Wasserfluten wurde eine Entölung von 44% erzielt, mit Hilfe des Tensidflutens ließ sich sodann die Gesamtentölung auf 55% steigern, wobei allerdings das Tensid bereits vor dem Ausfluten der Ölbank durchbrach und letztere überwiegend als Emulsion gefördert wurde. Der Druckgradient lag bei 0,5 bar/m. Der Vergleich der Beispiele 2 und 3 zeigt, daß bei den carboxymethylierten Oxethylaten durch Zusatz von Erdalkaliionen sehr viel günstigere Entölungsbedingungen geschaffen werden können. Sie sind eine Folge der besseren Temperaturanpassung der Phasen-Inversions-Temperatur relativ zur Formationstemperatur, die sich durch den Zusatz von Erdalkaliionen gezielt steuern läßt.

## Patentansprüche

1. Verfahren zur Gewinnung von weitgehend emulsionsfreiem Öl aus einer unterirdischen Lagerstätte, die mit Formationswasser oder Flutwasser, das bei mittlerer oder hoher Gesamtsalinität weniger als ca. 3 Gewichtsprozent an Erdalkaliionen enthält, geflutet wurde, durch Einpressen einer 0,1- bis 30%igen Lösung oder Dispersion in Formations- oder Flutwasser von carboxymethylierten Oxethylaten der Formel

$$R-(OCH_2-CH_2)_n-OCH_2-COOM$$

in der R einen linearen oder verzweigten aliphatischen Rest mit 6 bis 20 Kohlenstoffatomen oder einen alkylarylaromatischen Rest mit 3 bis 16 Kohlenstoffatomen in der Alkylgruppe darstellt und M ein Alkali- oder Erdalkali-Metallion oder Ammonium bedeutet, in eine Injektionsbohrung, wobei der Tensidlösung Erdalkaliionen in solcher Konzentration zugegeben werden, daß die Phasen-Inversions-Temperatur des Systems Rohöl/Formations- bzw. Flutwasser/Tensid höchstens 10°C oberhalb der Lagerstättentemperatur liegt, dadurch gekennzeichnet, daß n zwischen 1 und 3 liegt.

2. Verfahren nach Anspruch 1, dadurch gekennzeichnet, daß 0,05 bis 1 PV Formations- bzw. Flutwasser, welches Erdalkaliionen in gleicher oder etwas höherer Konzentration wie die Tensidlösung enthält, als Vorspülflüssigkeit vor der Tensidlösung eingepreßt wird.

3. Verfahren nach den Ansprüchen 1 und 2, dadurch gekennzeichnet, daß Formations- oder Flutwasser, welches Erdalkaliionen in gleicher oder etwas höherer Konzentration wie die Tensidlösung enthält, als Nachspülflüssigkeit nach der Tensidlösung eingepreßt wird.

4. Verfahren nach Anspruch 3, dadurch gekennzeichnet, daß die wäßrige Lösung ein viskositätserhöhendes Polymer enthält.

5. Verfahren nach den Ansprüchen 1 bis 4, dadurch gekennzeichnet, daß der Carboxymethylierungsgrad der carboxymethylierten Oxethylate 10 bis 90 Gewichtsprozent (?) beträgt.

## Claims

1. A process for the recovery of largely emulsionfree oil from a subterranean deposit which has been flooded with formation water or flood water of medium to high total salinity but containing less than about 3% weight of alkaline earth metal ions by forcing in through an injection bore a 0.1 to 30% solution or dispersion in formation water or flood water of a carboxymethylated oxyethylate of the formula

$$R-(OCH_2-CH_2)_n-OCH_2-COOM$$

where R is a linear or branched aliphatic radical of 6 to 20 carbon atoms or an alkylaromatic radical of 3 to 16 carbon atoms in the alkyl group and M is an alkali metal or alkaline earth metal ion or ammonium, alkaline earth metal ions being added to the surfactant solution in such a concentration that the phase-inversion temperature of the crude oil/formation water or flood water/surfactant system is at most 10° C above the temperature of the deposit, characterised in that n is from 1 to 3.

2. A process according to claim 1, characterised in that 0.05 to 1 pore volume of formation water or flood water containing alkaline earth metal ions in the same concentration as or a somewhat higher concentration than the surfactant solution is forced in as a pre-spraying liquid before the surfactant solution.

3. A process according to claim 1 or 2, characterised in that formation water or flood water containing alkaline earth metal ions in the same concentration as or a somewhat higher concentration than the surfactant solution is forced in as post-spraying liquid after the surfactant solution.

4. A process according to claim 3, characterised in that the aqueous solution contains a polymer

raising its viscosity.

5. A process according to any of claims 1 to 4, characterised in that the degree of carboxymethylation of the carboxymethylated oxyethylate amounts to 10 to 90% by weight.

**Revendications**

1. Procédé pour extraire du pétrole dans une large mesure exempt d'émulsion d'un gisement souterrain que l'on a inondé avec l'eau de formation ou de l'eau d'inondation qui, à une salinité totale moyenne ou élevée, contient moins de 3% environ du poids d'ions alcalino-terreux, par injection d'une solution ou dispersion à 0,1—30%, dans de l'eau de formation ou de l'eau d'inondation, de produits d'éthoxylation carboxy-méthylés de la formule:

$$R-(OCH_2-CH_2)_n-OCH_2-COOM,$$

dans laquelle R représente un radical aliphatique linéaire ou ramifié contenant de 6 à 20 atomes de carbone ou un radical alkyl-aryl-aromatique contenant de 3 à 16 atomes de carbone dans le groupe alkyle et M représente un ion métallique alcalin ou alcalino-terreux ou un ion ammonium, dans un puits d'injection, en ajoutant à la solution de surfactif des ions alcalino-terreux à une concentration telle que la température d'inversion de phases du système pétrole brut/eau de formation ou eau d'inondation/surfactif soit supérieure de 10°C au maximum à la température du gisement, caractérisé par le fait que n se situe entre 1 et 3.

2. Procédé selon la revendication 1, caractérisé par le fait que l'on injecte avant la solution de surfactif, comme liquide de prélavage, de 0,05 à 1 volume de pores d'eau de formation ou d'inondation qui contient des ions alcalino-terreux à une concentration égale ou un peu supérieure à celle de la solution de surfactif.

3. Procédé selon les revendications 1 et 2, caractérisé par le fait que l'on injecte après la solution de surfactif, comme liquide de post-lavage, de l'eau de formation ou d'inondation qui contient des ions alcalino-terreux à une concentration égale ou un peu supérieure à celle de la solution de surfactif.

4. Procédé selon la revendication 3, caractérisé par le fait que la solution aqueuse contient un polymère élevant la viscosité.

5. Procédé selon les revendications 1 à 4, caractérisé par le fait que le degré de carboxyméthylation des produits d'éthoxylation carboxyméthylés est de 10 à 90% en poids.

Abb. 1